**Europäisches Patentamt**

**European Patent Office**

**Office européen des brevets**

(19)

(11) Veröffentlichungsnummer : **0 289 848 B1**

(12) # EUROPÄISCHE PATENTSCHRIFT

(45) Veröffentlichungstag der Patentschrift :
11.09.91 Patentblatt 91/37

(51) Int. Cl.⁵ : **B60R 13/02**

(21) Anmeldenummer : **88106186.5**

(22) Anmeldetag : **19.04.88**

(54) Verbindung zwischen zwei aneinandergrenzenden formsteifen Verkleidungsteilen.

(30) Priorität : 02.05.87 DE 3714646

(43) Veröffentlichungstag der Anmeldung :
09.11.88 Patentblatt 88/45

(45) Bekanntmachung des Hinweises auf die
Patenterteilung :
11.09.91 Patentblatt 91/37

(84) Benannte Vertragsstaaten :
FR GB IT SE

(56) Entgegenhaltungen :
EP-A- 0 088 931
EP-A- 0 186 649
US-A- 3 096 601

(73) Patentinhaber : Daimler-Benz
Aktiengesellschaft
Postfach 600202 Mercedesstrasse 136
W-7000 Stuttgart 60 (DE)

(72) Erfinder : Schmitt, Klaus
Hermann-Kurz-Strasse 15
W-7032 Sindelfingen 6 (DE)

## Beschreibung

Die Erfindung betrifft eine Verbindung zwischen zwei aneinandergrenzenden, im wesentlichen formsteifen Verkleidungsteilen in Form eines Dach-Innenverkleidungsteiles und einer Seitenverkleidung in einem Kraftwagen, wobei ein Verkleidungsteil in Nähe der Verbindungsstelle karosseriefest festgelegt ist und etwa S-förmig ausläuft und wobei das andere Verbindungsteil in eine nach außen offene Rinne des S-förmigen Auslaufs eintaucht.

Eine derartige, Toleranzen ausgleichende Verbindung zwischen einem karosseriefesten Seitenverkleidungsteil und einem mit diesem verspannten Dach-Innenverkleidungsteil ist durch die DE-A-3236625 bekannt. Da derartige Dach-Innenverkleidungsteile recht voluminös und damit schwer sein können, ist mitunter dann kein sicherer Sitz mehr gewährleistet, wenn sich die Außenmaße im Bereich der unteren Toleranzgrenze bewegen, obwohl das Haltevermögen der Befestigungsstelle an der Seitenverkleidung an sich ausreichend ist. Störend wirkt dagegen die sichtbare Befestigungsstelle.

Aufgabe der Erfindung ist es, unter Beibehaltung des Toleranzausgleiches eine Befestigung zu schaffen, die einen sicheren Sitz der Verkleidungsteile auch dann gewährleistet, wenn diese ihre untere Toleranzgrenze erreichen. Weiter soll die Befestigung so beschaffen sein, daß im montiertem Zustand der Verkleidungsteile das Befestigungselement nicht störend in Erscheinung tritt.

Diese Aufgabe wird dadurch gelöst, daß das Dach-Innenverkleidungsteil den S-förmigen Auslauf aufweist und sein freier Schenkel festgelegt ist, und daß die Befestigungsstelle durch die eingeschobene Seitenverkleidung überdeckt ist. Durch die Festlegung des gewichtsintensiveren Dach-Innenverkleidungsteiles ist dessen Halt stets gewährleistet und auftretende Toleranzen werden durch die in gewissen Grenzen faltenbalgartige Wirkung des S-förmigen Auslaufs ausgeglichen. Dessen zur Befestigungsstelle offene, das Seitenverkleidungsteil aufnehmende Rinne vermag auch größere Maßabweichungen dieses Verkleidungsteiles aufzufangen, wobei gleichzeitig eine stilistisch einwandfreie Abdeckung der Befestigungsstellen eintritt.

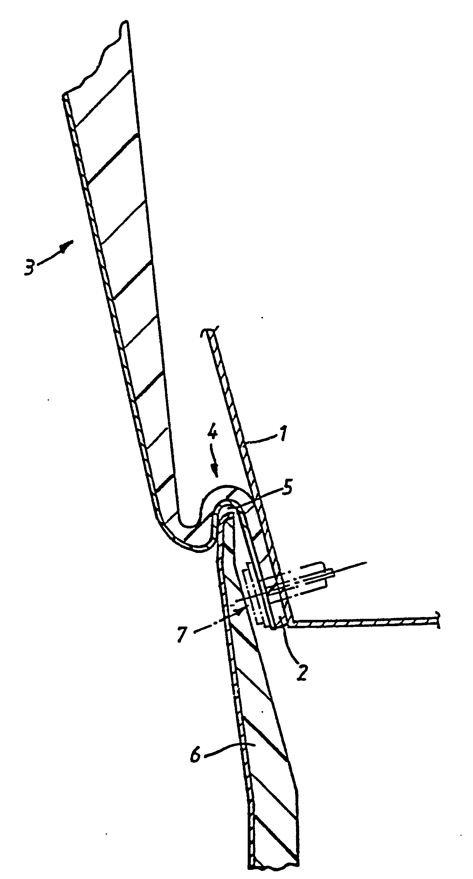

Der Gegenstand der Erfindung wird nachfolgend anhand eines in der Zeichnung dargestellten Ausführungsbeispiels näher erläutert.

An einem, einen Dachbereich darstellenden Karosserieteil 1 ist der freie Schenkel 2 eines einer Dach-Innenverkleidung 3 zugeordneten S-förmigen Auslaufs 4 festgelegt.

In nicht dargestellter Weise ist der S-förmige Auslauf 4 umlaufend in sich geschlossen ausgebildet und in seine nach außen offene Rinne 5 sind Seitenverkleidungsteile 6 eingeschoben, von denen nur eines angedeutet und als Rückwand ausgebildet ist. Die Befestigungsstellen 7 der Dach-Innenverkleidung 3 am Karosserieteil, von denen nur eine ersichtlich ist, werden beim Einschieben des Seitenverkleidungsteiles 6 in die Rinne 5 abgedeckt, so daß sich ein gefälliges Aussehen ergibt.

## Patentansprüche

1. Verbindung zwischen zwei aneinandergrenzenden, im wesentlichen formsteifen Verkleidungsteilen (3, 6) in Form eines Dach-Innenverkleidungsteiles (3) und einer Seitenverkleidung (6) in einem Kraftwagen, wobei ein Verkleidungsteil (3) in Nähe der Verbindungsstelle karosseriefest festgelegt ist und etwa S-förmig ausläuft und wobei das andere Verkleidungsteil (6) in eine nach außen offene Rinne (5) des S-förmigen Auslaufs (4) eintaucht, **dadurch gekennzeichnet,** daß das Dach-Innenverkleidungsteil (3) den S-förmigen Auslauf (4) aufweist und sein freier Schenkel (2) festgelegt ist und daß die Befestigungsstelle (7) durch die eingeschobene Seitenverkleidung (6) überdeckt ist.

## Claims

1. A connection between two adjacent substantially rigid lining parts (3, 6) in the form of a roof inner lining part (3) and a side lining (6) in a motor vehicle, one lining part (3) being secured rigidly to the vehicle body in the proximity of the place of connection and extending substantially S-shaped, and the other lining part (6) entering a channel (5) open outwardly of the S-shaped part (4), characterized in that the roof inner lining part (3) has the S-shaped part (4) and its free arm (2) is firmly secured, and in that the place of connection (7) is covered by the pushed-in side lining (6).

## Revendications

1. Assemblage entre deux éléments d'habillage contigus (3, 6) sensiblement indéformables, sous la forme d'un élément d'habillage intérieur de toit (3) et d'un habillage latéral (6) dans un véhicule automobile, un élément d'habillage (3) étant fixé rigidedement à la carrosserie au voisinage du point d'assemblage et se terminant approximativement en forme de S, et l'autre élément d'habillage (6) s'enfonçant dans une rigole ouverte vers l'extérieur (5) de la terminaison en S (4), **caractérisé** en ce que l'élément d'habillage intérieur de toit (3) présente la terminaison en S (4) et sa branche libre (2) est fixée, et en ce que le point de fixation (7) est recouvert par l'habillage latéral inséré (6).